# DEMANDE DE BREVET EUROPEEN

(11) **EP 3 026 654 A1**
(43) Date de publication de la demande: **01.06.2016**
(21) Numéro de dépôt: 14306872.4
(22) Date de dépôt: 25.11.2014
(51) Int. Cl.: G08G 1/14, H04L 9/32

(54) **Procédé de gestion d'emplacements de parking sur la voie publique**

(71) Demandeur: GEMALTO SA, 92190 Meudon (FR)
(72) Inventeur: Riou, Mikael, 92190 Meudon (FR); Marseille, François-Xavier, 92197 MEUDON (FR)
(74) Mandataire: Cassagne, Philippe M.J.

(57) **Abrégé**

L'invention concerne un procédé de gestion d'emplacements de parking sur la voie publique 1 comprenant des étapes d'interrogation par une unité 11 d'un véhicule de capteurs du véhicule sur l'état d'occupation d'un emplacement de parking autour du véhicule, d'établissement d'un canal de communication entre l'unité 11 et un serveur distant 7, d'authentification de l'unité 11 auprès du serveur 7, d'envoi dans un message d'une clé publique de cryptage par le serveur 7 à l'unité 11, d'encryptage les données de géolocalisation du véhicule et de l'état d'occupation, d'envoi des données cryptées au serveur 7, de décryptage au niveau du serveur 7 des données cryptées reçues, de comparaison des données de géolocalisation reçues avec une base de données 9 contenant les emplacements de parking référencés, et de mise à jour dans la base de données 9 de l'état d'occupation des emplacements de parking référencés.

## Description

La présente invention concerne un procédé de gestion d'emplacements de parking sur la voie publique.

Dans des villes, la rareté des emplacements disponibles de parking en particulier sur la voie publique, est un défi permanent de gestion et un souci aussi bien pour les autorités locales que pour les utilisateurs.

Dans des structures de parking du genre parking sous-terrain ou immeuble de parking, il est connu d'améliorer la gestion du parking en équipant chaque place de parking d'un capteur de présence d'un véhicule.

Ainsi, à tout moment, le gérant de cette structure dispose d'une information exacte sur l'occupation de chaque emplacement de parking et peut guider par des moyens de signalisation appropriés les utilisateurs entrant dans les parkings vers les places libres. Ce service est généralement très apprécié par les utilisateurs.

Cependant, ce système ne peut pas être transposé sur la voie publique. En effet, il serait trop cher d'équiper les emplacements de parking de tels capteurs d'occupation ou de présence. De plus, une difficulté supplémentaire réside dans le fait que les emplacements de parking sur la voie publique ne disposent pas d'une infrastructure adaptée (connexion d'alimentation électrique ; connexion de communication) permettant de mettre en place un tel réseau de capteurs avec un coût acceptable. En outre, les frais de maintenance et de gestion d'un tel réseau seraient très élevés.

Enfin, de tels capteurs seraient soumis à des conditions climatiques très sévères, ce qui nécessiterait aussi de prévoir une protection des capteurs dont le coût ne serait plus acceptable.

Pour remédier à ce problème, il a été proposé par exemple dans le document DE 10 2012 222 810 d'utiliser des capteurs déjà installés sur des véhicules pour détecter des emplacements de parking libre sur la voie publique. En effet, les véhicules automobiles de nos jours disposent de plus en plus de capteurs intégrés dans des systèmes d'aide à la conduite (aide au parking, avertissement de franchissement de lignes blanches, avertisseurs de dépassement latéral, allumage automatique de phares, etc) comme par exemple des caméras frontales ou arrière, des radars, des capteurs ultrasons etc. Ces capteurs sont, en utilisant un logiciel adapté, capables de détecter des objets dans l'environnement du véhicule, en particulier un autre véhicule.

Ainsi, lorsqu'un véhicule se gare par exemple dans des emplacements de parking en enfilade, un capteur du véhicule peut détecter s'il y a un véhicule devant ou à l'arrière et donc s'il y a des emplacements de parking libre dans l'espace de voisinage du véhicule qui est en train de se garer ou qui est garé.

Les informations récoltées sur des emplacements de parking libres sont envoyées via une interface de communication sans fil à un serveur central. Ce dernier peut ensuite être interrogé par des utilisateurs pour trouver un emplacement de parking libres lors qu'ils arrivent vers leur destination.

Cependant, ce système connu présente l'inconvénient que les communications avec le serveur ne sont pas sécurisées ce qui pose problème en termes de protection de la vie privée et de l'usurpation des données. En effet, le système tel que présenté dans le document DE 10 2012 222 810 paraît être fragile vis-à-vis de manipulations frauduleuses pour déclarer par exemple un emplacement de parking occupé alors qu'en réalité, cet emplacement est libre. De telles manoeuvres pourraient être utilisées pour se réserver une ou plusieurs places voir toutes les places. Pour le gestionnaire des emplacements de parking sur la voie publique, ceci représente un manque à gagner étant donné que le système lors d'une interrogation ne va plus envoyer de véhicules vers ce ou ces emplacement(s).

Un but de la présente invention est donc de proposer un procédé de gestion d'emplacements de parking sur la voie publique plus sécurisé.

A cet effet, l'invention a pour objet un procédé de gestion d'emplacements de parking sur la voie publique comprenant des étapes suivantes :
- interroger par une unité mobile installée dans un véhicule automobile un ou plusieurs capteurs du véhicule sur l'état d'occupation d'un emplacement de parking autour du véhicule,
- établir un canal de communication entre l'unité mobile et un serveur distant,
- authentifier l'unité mobile auprès du serveur distant,
- envoyer dans un message une clé publique de cryptage par le serveur distant à l'unité mobile,
- encrypter les données de géolocalisation de l'emplacement de parking et son état d'occupation,
- envoyer dans un message les données cryptées de géolocalisation de l'emplacement de parking et son état d'occupation au serveur distant,
- décrypter au niveau du serveur distant les données cryptées reçues,
- comparer les données de géolocalisation reçues avec une base de données contenant les emplacements de parking référencés,
- mettre à jour dans la base de données l'état d'occupation des emplacements de parking référencés.

Le procédé de gestion peut comporter en outre une ou plusieurs des caractéristiques suivantes prises seules ou en combinaison :
L'unité mobile comprend par exemple également une base de données des emplacements de parking référencés et l'étape d'interrogation est déclenchée par l'unité mobile lorsque celle-ci est localisée sur un emplacement de parking référencé.

Selon un aspect, l'étape d'authentification comprend l'envoi par l'unité mobile d'un message chiffré avec une clé publique de cryptage au serveur distant. La clé publique cryptographique du message d'authentification de l'unité mobile au serveur distant est par exemple générée grâce à une clef dérivée d'une clef maitre connue du serveur distant. Cette clef dérivée peut être unique à chaque unité mobile et est sauvegardé de façon sécurisée dans l'élément mobile sécurisé.

Selon un autre aspect, l'unité mobile envoie également des données cryptées de géolocalisation de l'emplacement de parking sur lequel se trouve le véhicule dans lequel l'unité mobile est installée et son état d'occupation.

Selon un mode de réalisation, on met l'unité mobile en veille lors d'un déplacement du véhicule.

Selon un développement, l'unité mobile envoie également dans un message des données cryptées de géolocalisation de l'emplacement de parking sur lequel se trouve le véhicule lors du départ du véhicule pour indiquer un emplacement de parking libéré.

Selon un autre aspect, l'envoi et la réception des messages entre l'unité mobile et le serveur distant est réalisé par l'intermédiaire d'un réseau de télécommunications, notamment un réseau mobile de télécommunications.

Suite à une requête de localisation d'un emplacement libre, on prévoit par exemple que le serveur distant envoie un message aux unités mobiles dans une zone géographique ciblée pour mettre à jour l'état d'occupation des emplacements de parking référencés dans cette zone géographique ciblée.

Selon encore un autre aspect, le serveur distant met à jour la base de données des emplacements de parking référencés dans l'unité mobile lorsque celle-ci entre dans une zone prédéfinie non couverte par la base de données.

L'invention concerne également une unité mobile d'un système de gestion d'emplacements de parking sur la voie publique, le système comprenant un serveur distant comportant une base de données contenant des emplacements de parking référencés, ladite unité mobile étant destinée à être installée dans un véhicule automobile,
caractérisée en ce que l'unité mobile est configurée pour
- interroger un ou plusieurs capteurs du véhicule pour détecter l'état d'occupation d'un emplacement de parking autour du véhicule,
- établir un canal de communication avec le serveur distant,
- s'authentifier auprès du serveur distant,
- recevoir du serveur distant dans un message une clé publique de cryptage,
- encrypter les données de géolocalisation de l'emplacement de parking et son état d'occupation,
- envoyer dans un message des données cryptées de géolocalisation de l'emplacement de parking et son état d'occupation au serveur distant.

L'unité mobile peut présenter une ou plusieurs des caractéristiques suivantes prises seules ou en combinaison :
- L'unité mobile peut également comprendre une base de données des emplacements de parking référencés et elle est configurée pour déclencher l'étape d'interrogation lorsqu'elle est localisée sur un emplacement de parking (3) référencé.
- L'unité mobile est notamment configurée pour envoyer une clé cryptographique publique au serveur distant.
- L'unité mobile est par exemple configurée pour envoyer également des données cryptées de géolocalisation de l'emplacement de parking sur lequel se trouve le véhicule dans lequel l'unité mobile est installée et son état d'occupation.

Selon un aspect, l'unité mobile comprend un capteur de géolocalisation et au moins un accéléromètre.

On prévoit de configurer l'unité mobile pour se mettre en veille lors d'un déplacement du véhicule.

Selon un autre aspect, l'unité mobile est configurée pour envoyer dans un message des données cryptées de géolocalisation de l'emplacement de parking sur lequel se trouve le véhicule lors du départ du véhicule pour indiquer un emplacement libéré.

L'unité mobile comprend en particulier un composant de télécommunication pour communiquer sur un réseau de télécommunications.

Ce composant de télécommunications peut comprendre une carte à puce mémorisant la clé cryptographique d'authentification.

L'invention concerne également un système de gestion d'emplacements de parking sur la voie publique comprenant une unité mobile tel que définie ci-dessus et un serveur distant comportant une base de données contenant des emplacements de parking référencés et configuré pour communiquer avec l'unité mobile.

D'autres avantages et caractéristiques apparaîtront à la lecture de la description de l'invention, ainsi que des dessins annexés sur lesquels :
- la figure 1 est un schéma synthétique montrant un exemple d'une situation de trafic standard,
- la figure 2 est un schéma synoptique d'un système selon l'invention,
- la figure 3 est un schéma synoptique montrant plus en détail l'unité mobile du système et certains de ses composants, et
- la figure 4 est un schéma synthétique du procédé selon l'invention.

Sur ces figures, les éléments identiques portent les mêmes numéros de référence.

Dans la description, certains éléments sont référencés par des numéros avec des indices. Dans ce cas, l'indice désigne un élément individuel parmi divers éléments d'un groupe.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

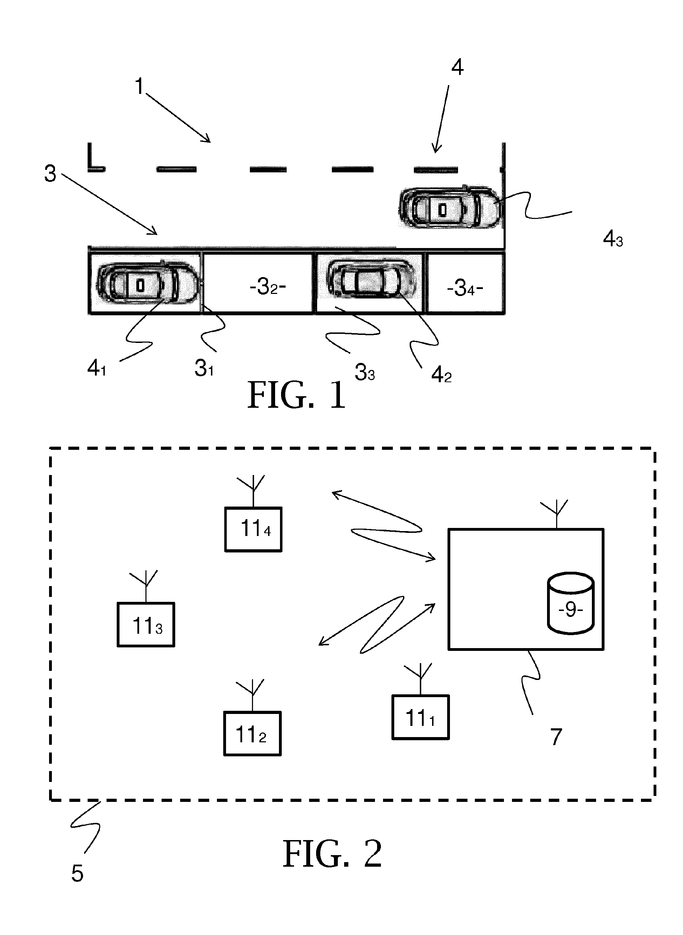

La figure 1 montre une situation de trafic standard avec une route 1 bordée d'emplacements de parking 3 (3₁, 3₂, 3₃ et 3₄) en enfilade. Il peut s'agir d'emplacements de parking 3 payants ou gratuits. Il s'agit d'emplacements de parking qui sont situés au niveau de la voie publique, c'est-à-dire il ne s'agit pas d'un parking privé comme un parking sous-terrain ou un bâtiment de parking. Ces emplacements de parking 3 (3₁, 3₂, 3₃ et 3₄) sont des emplacements référencés, c'est-à-dire qu'ils sont identifiés en tant que tel pour potentiellement accueillir des véhicules automobiles pour un stationnement temporaire. Ce référencement des emplacements de parking 3 se traduit par exemple par un marquage au sol et l'association de données de géolocalisation à cet emplacement 3. Cette notion d'emplacements référencés possède une certaine importance dans la mesure où par exemple à l'extrémité d'une bande d'emplacements de parking, il y a généralement effectivement de la place pour garer un véhicule automobile, mais le stationnement à ces endroits n'est pas autorisé.

Sur cette figure sont également représentées trois véhicules automobiles 4 (4₁, 4₂ et 4₃).

Les véhicules automobiles 4₁ et 4₂ occupent respectivement les emplacements de parking 3₁ et 3₃. Les emplacements de parking 3₂ et 3₄ sont libres de toute occupation et sont prêts à être occupés, par exemple par le véhicule automobile 4₃ qui est sur la route 1 à la recherche d'un emplacement de parking.

La figure 2 montre un exemple d'un système 5 de gestion d'emplacements de parking sur la voie publique.

Ce système 5 comprend d'une part un serveur 7 équipé de moyens de télécommunication, par exemple via un réseau de téléphonie mobile, et comportant une base de données 9 contenant les données géographiques des emplacements de parking référencés (données de géolocalisation) et d'autre part au moins une, de préférence plusieurs unités mobiles 11 (11₁, 11₂, 11₃, 11₄) installées dans des véhicules automobiles, par exemple le véhicule 4₁. Par installé, on entend d'une part que l'unité mobile 11 se trouve dans le véhicule lors du déplacement de celui-ci et au moins jusqu'à ce que le véhicule soit garé et le conducteur ait quitté le véhicule et d'autre part que l'unité mobile 11 puisse communiquer avec le véhicule 4 notamment avec ses ordinateurs de bord, par exemple via une liaison Bluetooth™. Ainsi, il peut s'agir d'un téléphone portable, par exemple un smartphone, chargé d'un logiciel adapté pour communiquer avec le véhicule automobile et en particulier avec les capteurs d'occupation du sol extérieur du véhicule comme par exemple des capteurs ultrasons, des radars ou des caméras à l'avant, à l'arrière ou de côté du véhicule. Selon une variante, l'unité mobile 11 est installée à demeure dans le véhicule automobile et gérée directement par les ordinateurs de bord du véhicule 4 ou intégré en tant que programme informatique dans ces ordinateurs de bord.

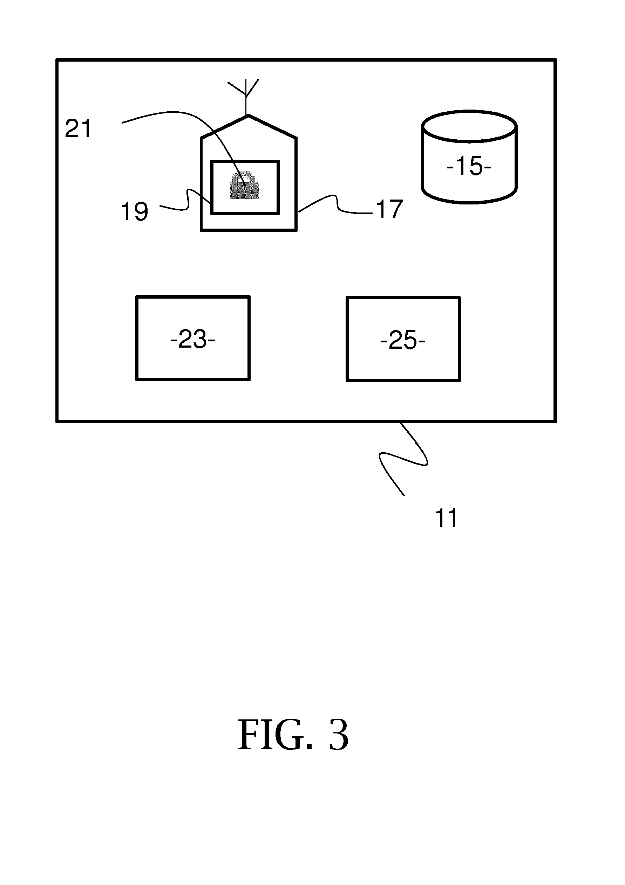

La figure 3 montre un schéma simplifié de l'unité mobile 11. Celle-ci comprend également une base de données 15 des emplacements de parking référencés. Cette base de données 15 est intéressante pour indiquer à l'unité mobile 11 que le véhicule est un train de se garer et pour par exemple déclencher l'interrogation du ou des capteurs d'occupation du véhicule et/ou la mise en communication avec le serveur 7.

L'unité mobile 11 comprend aussi un composant 17 de télécommunication pour communiquer avec le serveur distant 7 par l'intermédiaire d'un réseau de télécommunications, notamment un réseau de téléphonie mobile.

Le composant de télécommunications 17 comprend en particulier une carte à puce 19 mémorisant dans une de ses mémoires une clé publique cryptographique 21.

Cette clé publique cryptographique 21 lui sert pour s'authentifier auprès du serveur distant 7.

L'unité mobile 11 peut de plus comprendre un capteur de géolocalisation 23 pour déterminer les données de géolocalisation des emplacements de parking libre et éventuellement en plus au moins un accéléromètre 25 pour déterminer si le véhicule 4 est à l'arrêt ou non. Le capteur de géolocalisation peut comprendre une puce GPS (GPS pour « global positionning system ») ou une interface permettant de trianguler la position de l'unité mobile par rapport aux antennes relais du réseau de télécommunication.

Bien que pas représenté, il est bien entendu que ces divers composants de l'unité 11 sont reliés les uns aux autres et peuvent échanger des informations ou données.

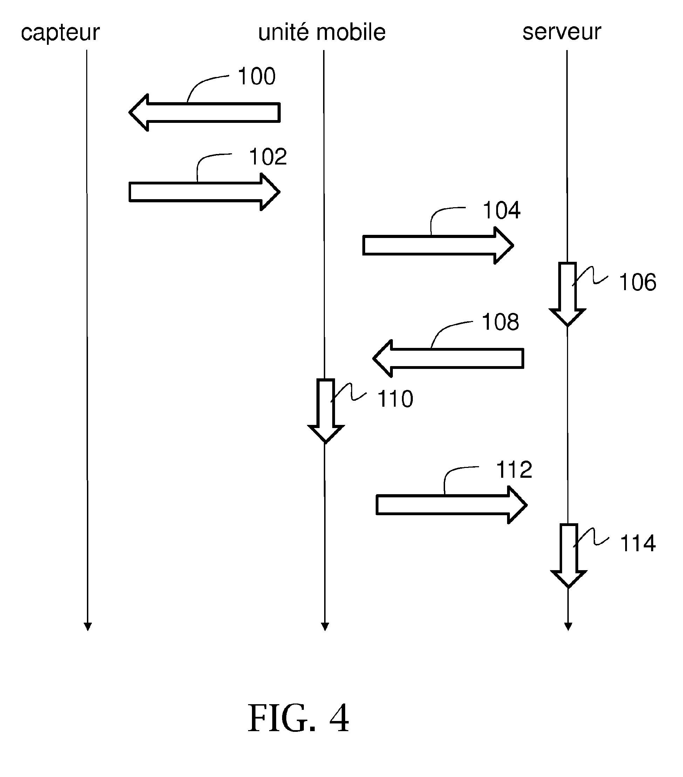

En référence à la figure 4, on va décrire maintenant un exemple d'un procédé de gestion d'emplacements de parking sur la voie publique.

Selon une première étape 100, l'unité mobile 11 interroge un ou plusieurs capteurs du véhicule si l'espace autour du véhicule, notamment à l'avant, à l'arrière, à gauche et à droite est occupé ou non et donc sur la disponibilité / l'état d'occupation d'un emplacement de parking 3 autour du véhicule 4. Comme décrit précédemment, il s'agit de capteurs d'occupation du sol autour du véhicule 4 comme une caméra avant ou arrière, des systèmes d'aide au parking avec leurs capteurs ultrasons ou des radars.

Afin d'être économe en énergie électrique, cette interrogation est par exemple seulement déclenchée lorsque l'unité mobile 11, et donc le véhicule 4, est localisée sur un emplacement de parking 3 référencé. En effet, en localisant l'unité mobile 11 et donc le véhicule 4 sur un emplacement de parking référencé, on détecte l'intention du conducteur de se garer. On peut en déduire aussi qu'il peut y avoir d'autres emplacements de parking, par exemple à l'avant ou à l'arrière du véhicule ou éventuellement sur les côté suivant la localisation des places de parking et des choix.

Dans le cas contraire, si l'emplacement occupé par le véhicule 4 ne correspond pas à un emplacement référencé, l'information sur un espace libre à l'avant ou à l'arrière du véhicule a peu de valeur car on ne peut pas savoir si le stationnement y est autorisé ou non. Etant donné que le système de gestion a pour but d'informer les automobilistes de façon fiable sur les emplacements libres et autorisés, on ne peut pas prendre en compte des emplacements non référencés sur lesquels le stationnement ne peut pas être garanti en cas de non occupation.

Cette information sur l'état d'occupation des emplacements de parking 3 autour du véhicule 4 est communiquée lors d'une étape 102 à l'unité mobile 11₁ du véhicule 4₁ et celle-ci établit lors d'une étape 104 un canal de communication avec le serveur distant 7 et s'authentifie auprès de celui-ci, notamment par l'envoi d'une clé publique cryptographique d'authentification 21. L'étape d'authentification comprend l'envoi par l'unité mobile 11 d'un message chiffré avec une clé publique de cryptage au serveur distant 7. La clé publique cryptographique du message d'authentification de l'unité mobile 11 au serveur distant 7 est par exemple générée grâce à une clef dérivée d'une clef maître connue du serveur distant 7. Cette clef dérivée peut être unique à chaque unité mobile 11 et est sauvegardé de façon sécurisée dans l'élément mobile sécurisé 11. Ce permet de plus de vérifier que le serveur 7 n'est pas corrompu. Selon une variante, on peut envisager que le canal de communication est seulement établi si un emplacement de parking 3 libre est identifié, par exemple l'emplacement 3₂ de la figure 1.

Le serveur distant 7 compare lors d'une étape 106 la clé publique de cryptage reçue avec celles enregistrées dans une de ses mémoires pour autoriser ou non la communication.

Si le message d'authentification correspond à une unité mobile 11 autorisée, alors le serveur 7 envoie lors d'une étape 108 dans un message une clé publique de cryptage à l'unité mobile 11.

Puis, cette clé publique du serveur 7 sert à l'unité mobile 11 pour encrypter lors d'une étape 110 les données de géolocalisation du ou des emplacement(s) de parking libre détecté(s).

Il peut aussi être utilisé pour encrypter les données de géolocalisation de l'emplacement de parking occupé (ici 3₁) par le véhicule 4 dans lequel l'unité mobile 11 est installée.

Ensuite, l'unité mobile 11 envoie lors d'une étape 112 dans un message les données cryptées de géolocalisation de l'emplacement de parking et leur état d'occupation, le cas échéant aussi l'état occupé de l'emplacement de parking occupé par le véhicule 4₁, au serveur distant 7.

Le serveur distant 7 va décrypter lors d'une étape 114 ces données reçues et les comparer avec les données de géolocalisation des emplacements de parking référencés contenu dans la base de données 9, puis mettre à jour dans la base de données l'état d'occupation (occupé ou libre) des emplacements de parking 3.

Ainsi, lorsqu'un utilisateur, par exemple le conducteur du véhicule 4₃ cherche un emplacement 3 de parking non occupé, il peut interroger par exemple via son smartphone chargé d'un logiciel adapté le serveur distant 7 et être guidé vers un emplacement libre 3₂.

Du fait de la communication sécurisée et cryptée entre l'unité mobile 11 et le serveur 7, on évite toute fraude comme par exemple indiquer qu'un emplacement de parking est occupé alors que ce n'est pas le cas.

Cette communication sécurisée et cryptée permet également de se prémunir d'une utilisation frauduleuse des données de géolocalisation, comme par exemple pour suivre un véhicule.

Par ailleurs, grâce au capteur de géolocalisation et/ou à l'accéléromètre, on peut savoir si le véhicule se déplace ou non. Si le véhicule se déplace, on peut mettre l'unité mobile 11 en veille ou dans un état inactif pour économiser de l'énergie, notamment si l'unité mobile 11 possède sa propre alimentation électrique, par exemple sous forme d'une batterie, en particulier une batterie rechargeable via un module solaire ou une clé USB™.

De plus, grâce au capteur de géolocalisation 23 et/ou à l'accéléromètre 25, l'unité mobile 11 peut envoyer dans un message des données cryptées de géolocalisation de l'emplacement de parking sur lequel se trouve le véhicule lors du départ du véhicule pour indiquer un emplacement libéré.

Selon un développement envisagé, suite à une requête de localisation d'un emplacement de parking libre par un utilisateur, on envisage que le serveur distant 7 envoie un message aux unités mobiles 11 dans une zone géographique ciblée pour mettre à jour l'état d'occupation des emplacements de parking 3 référencés.

Le serveur distant 7 peut mettre à jour la base de données 15 des emplacements 3 de parking référencés dans l'unité mobile 11 lorsque celle-ci entre dans une zone prédéfinie non couverte par la base de données 15 ou après réception d'un message contenant des données de géolocalisation d'un emplacement de parking libre 3.

On prévoit que la base de données 15 ne contienne que des données de géolocalisation d'emplacements de parking 3 pour une zone limitée et puis une mise à jour automatique lorsque le véhicule se déplace en dehors de cette zone. Ainsi, on peut réduire par exemple la taille de la base de données 15 et donc l'espace mémoire nécessaire dans l'unité mobile 11 pour couvrir par exemple seulement un quartier d'une ville, une ville ou un département sans pénaliser le système 5 lorsque l'unité mobile 11 se trouve dans un périmètre en dehors de la zone limitée des emplacements référencés.

Bien entendu, des modifications peuvent être apportées au procédé décrit ci-dessus sans sortir du cadre de la présente invention.

Ainsi, on peut aussi prévoir que l'unité mobile 11 interroge le serveur distant 7 à intervalles réguliers ou que l'unité mobile 11 est interrogée par le serveur 7 à intervalles réguliers.

Ceci permettra que les bases de données 9 ou 15 sont mis à jour en temps réel.

## Revendications

1. Procédé de gestion d'emplacements de parking (3) sur la voie publique (1) comprenant des étapes suivantes :
- interroger par une unité mobile (11) installée dans un véhicule automobile (4) un ou plusieurs capteurs du véhicule sur l'état d'occupation d'un emplacement de parking (3) autour du véhicule (4),
- établir un canal de communication entre l'unité mobile (11) et un serveur distant (7),
- authentifier l'unité mobile (11) auprès du serveur distant (7),
- envoyer dans un message une clé publique de cryptage par le serveur distant (7) à l'unité mobile (11),
- encrypter les données de géolocalisation de l'emplacement de parking (3) et son état d'occupation,
- envoyer dans un message les données cryptées de géolocalisation de l'emplacement de parking (3) et son état d'occupation au serveur distant (7),
- décrypter au niveau du serveur distant (7) les données cryptées reçues,
- comparer les données de géolocalisation reçues avec une base de données (9) contenant des emplacements de parking (3) référencés,
- mettre à jour dans la base de données (9) l'état d'occupation des emplacements de parking (3) référencés.

2. Procédé de gestion selon la revendication 1, **caractérisé en ce que** l'unité mobile (11) comprend également une base de données (15) des emplacements de parking (3) référencés et **en ce que** l'étape d'interrogation est déclenchée par l'unité mobile (11) lorsque celle-ci est localisée sur un emplacement de parking (3) référencé.

3. Procédé selon la revendication 1, **caractérisé en ce que** l'étape d'authentification comprend l'envoi par l'unité mobile (11) d'un un message chiffré avec une clé publique de cryptage au serveur distant (7).

4. Procédé selon la revendication 1, caractérisé en ce l'unité mobile (11) envoie également des données cryptées de géolocalisation de l'emplacement de parking sur lequel se trouve le véhicule (4) dans lequel l'unité mobile (11) est installée.

5. Procédé selon la revendication 1, **caractérisé en ce que** l'on met l'unité mobile (11) en veille lors d'un déplacement du véhicule.

6. Procédé selon la revendication 1, **caractérisé en ce que** l'unité mobile (11) envoie également dans un message des données cryptées de géolocalisation de l'emplacement de parking sur lequel se trouve le véhicule lors du départ du véhicule pour indiquer un emplacement de parking (3) libéré.

7. Procédé selon la revendication 1, **caractérisé en ce que** l'envoi et la réception des messages entre l'unité mobile (11) et le serveur distant (7) est réalisé par l'intermédiaire d'un réseau de télécommunications, notamment un réseau mobile de télécommunications.

8. Procédé selon la revendication 1, **caractérisé en ce que** suite à une requête de localisation d'un emplacement libre (3), le serveur distant (7) envoie un message aux unités mobiles (11) dans une zone géographique ciblée pour mettre à jour l'état d'occupation des emplacements de parking (3) référencés dans cette zone géographique ciblée.

9. Procédé selon la revendication 1, **caractérisé en ce que** le serveur distant (7) met à jour la base de données (15) des emplacements de parking (3) référencés dans l'unité mobile (11) lorsque celle-ci entre dans une zone prédéfinie non couverte par la base de données (15) de l'unité mobile (11).

10. Unité mobile (11) d'un système (5) de gestion d'emplacements de parking (3) sur la voie publique, le système (5) comprenant un serveur distant (7) comportant une base de données (9) contenant des emplacements de parking (3) référencés, ladite unité mobile (11) étant destinée à être installée dans un véhicule automobile (4), **caractérisée en ce que** l'unité mobile (11) est configurée pour
- interroger un ou plusieurs capteurs du véhicule pour détecter l'état d'occupation d'un emplacement de parking (3) autour du véhicule (4),
- établir un canal de communication avec le serveur distant (7),
- s'authentifier auprès du serveur distant (7),
- recevoir du serveur distant (7) dans un message une clé publique de cryptage,
- encrypter les données de géolocalisation de l'emplacement de parking (3) et son état d'occupation,
- envoyer dans un message des données cryptées de géolocalisation de l'emplacement de parking et son état d'occupation au serveur distant (7).

11. Système de gestion d'emplacements de parking sur la voie publique comprenant au moins une unité mobile (11) selon la revendications 10 et un serveur distant (7) comportant une base de données (9) contenant des emplacements de parking référencés et configuré pour communiquer avec ladite au moins une unité mobile (11).
